Europäisches Patentamt

European Patent Office

Office européen des brevets

(19)

(11) Veröffentlichungsnummer: **0 247 468 B1**

## (12) EUROPÄISCHE PATENTSCHRIFT

(45) Veröffentlichungstag der Patentschrift: **12.08.92**

(51) Int. Cl.5: **B01D 29/54**, B01D 29/15, B29C 47/68

(21) Anmeldenummer: **87107135.3**

(22) Anmeldetag: **18.05.87**

(54) **Filtervorrichtung zum gleichmässigen Filtrieren von Kunststoffschmelzen.**

(30) Priorität: **23.05.86 DE 3617370**

(43) Veröffentlichungstag der Anmeldung:
**02.12.87 Patentblatt 87/49**

(45) Bekanntmachung des Hinweises auf die
Patenterteilung:
**12.08.92 Patentblatt 92/33**

(84) Benannte Vertragsstaaten:
**DE GB**

(56) Entgegenhaltungen:
**NL-C- 52 289**
**US-A- 2 661 845**
**US-A- 3 392 835**
**US-A- 3 817 377**

**Plastverarbeiter, 33.fg.(1982)Nr.12,
s.1447-1454,Henson,F "Einsatz von Grossflächenfiltern und dynamischen Mischern zur
Oualitätsverbesserung bei der Kunststoffverarbeitung bzw. Spinnextrusion"**

(73) Patentinhaber: **HOECHST AKTIENGESELL-
SCHAFT
Postfach 80 03 20
W-6230 Frankfurt am Main 80(DE)**

(72) Erfinder: **Peiffer, Herbert, Dr.
Katzenberg 78
W-6500 Mainz 21(DE)**
Erfinder: **Schmidt, Robert, Dr.
Hohlweg 20
W-6229 Walluf(DE)**

EP 0 247 468 B1

**Beschreibung**

Die Erfindung betrifft eine Filtervorrichtung zum gleichmäßigen Filtrieren von Kunststoffschmelzen, mit einem Filtergehäuse, in dem entlang konzentrischer Kreise Kerzenfilter angeordnet sind, die aus einem Stützkörper und einem Filtermaterial bestehen und durch welche die zu filternde Kunststoffschmelze hindurchfließt.

Eine derartige Filtervorrichtung ist beispielsweise in der Zeitschrift "Kunststoff 70", Jahrgang 1980, Band II, Seiten 753 bis 758, Verfasser F. Hensen und H. Simetzki, beschrieben. Mit Hilfe von Filtervorrichtungen für Kunststoffschmelzen werden in der Schmelze enthaltene Verunreinigungen, wie Schmutz, Gelteilchen, nicht aufgeschmolzenes Material und dergleichen, so gut wie möglich abgeschieden. Je nach verlangtem Reinheitsgrad sind hierzu Maschenweiten bzw. Porenweiten des Filtermaterials, bei dem es sich um Siebgewebe, Sintermaterial, Faservliese und dergleichen handelt, von 40 bis 80 $\mu$m bei Polypropylen-Reckfolien und von 5 bis 10 $\mu$m bei Polyterephthalatsäureester-Reckfolien (Polyesterfolie bzw. PETP-Folie) notwendig. Bedingt durch diese engen Maschenweiten werden große Filterflächen benötigt, um den Gesamtdruckabfall in der Filtervorrichtung und den zeitlichen Anstieg des Druckabfalls möglichst klein zu halten, andernfalls gehen ein hoher Gesamtdruckabfall und ein starker zeitlicher Anstieg des Druckabfalls zu Lasten der Wirtschaftlichkeit des Filtervorgangs.

Aus der DE-A-34 19 822 ist eine Filtervorrichtung für Schneckenextruder zur Behandlung von Kunststoffschmelze bekannt, die ein Filtergehäuse mit einer Ein- und Austrittsbohrung aufweist mit einem darin quer zum Schmelzestrom verschiebbaren Wechselschieber. Mindestens eine Aussparung im Wechselschieber dient zur Aufnahme eines Siebkörpers. Zur gleichmäßigen Verteilung des Schmelzestroms in der Filtervorrichtung und der auf die Filteroberfläche einwirkenden Druckkräfte ist die Aussparung ringförmig geformt, und ist ein mit der Eintrittsbohrung verbundener Schmelzekanal vorhanden, in welchem der zylinderförmige Siebkörper die Eindrehung formschlüssig umhüllt. Eine in der Längsachse des Wechselschiebers verlaufende Durchflußbohrung verbindet die Eintrittsbohrung mit der Austrittsbohrung im Filtergehäuse. In die Durchflußbohrung ist ein Verdrängerkegel eingebaut, wodurch ein ringförmiger Sammelkanal entsteht, der sich in Strömungsrichtung der Schmelze auf die Austrittsbohrung hin erweitert.

Bei dieser bekannten Filtervorrichtung handelt es sich um einen sogenannten Filtertopf, der im allgemeinen eine einzige Filterfläche in Zylinderform aufweist, die in der Gehäusewand der Filtervorrichtung in der Eintritts- und Austrittsbohrung angeordnet ist. Bei der bekannten Filtervorrichtung wird eine gleichmäßige Verteilung des Schmelzestroms im Filter und der einwirkenden Druckkräfte auf die Filteroberfläche, sowie eine volle Entlastung der auf die Führungsfläche des Wechselschiebers einwirkenden Querkräfte angestrebt. Durch den Verdrängerkegel im Schmelzekanal soll im Wechselschieber bei strömungsgünstigem Querschnittsverhältnis der Fließwiderstand der Schmelze auf ein Minimum reduziert werden.

Aus verfahrenstechnischer Sicht ist es wünschenswert, bei der installierten Filterfläche einen Filtertopf mit möglichst kleinem Volumen zu haben, der keine oder nur sehr kleine Totzonen aufweist. Die Filterfläche bildet bei einem Filtertopf im allgemeinen den größten Teil des Topfumfangs bzw. der Gehäusewand, wobei die äußere Form des Filtertopfes ähnlich zu derjenigen eines zylindrischen Kerzenfilters ist. Gibt es keine oder nur sehr kleine Totzonen im Filtertopf, so ist die Verweilzeitverteilung der einzelnen Teilchen eng und der Abbau der Schmelze minimal. Die Verweilzeitverteilung beschreibt, welcher Anteil der Masseteilchen nach welcher Zeit das Bauteil verlassen hat. Die Verweilzeitverteilung der Schmelzeteilchen in einem durchströmten Rohr läßt sich durch Integration der Geschwindigkeit der einzelnen Teilchen über den Querschnitt des Rohres berechnen. Dabei ist bekannterweise die Geschwindigkeit nahe der Rohrwand nahezu Null und steigt gegen die Mitte des Rohres auf den Maximalwert an. Unter der Enge der Verweilzeitverteilung ist zu verstehen, daß über den Rohrquerschnitt hinweg die Geschwindigkeitsunterschiede der Teilchen möglichst klein sein sollen, d.h. daß die Verweilzeit der Schmelzeteilchen über den Rohrquerschnitt möglichst geringe Unterschiede besitzen soll, was nur erreicht werden kann, wenn die Verteilung der Geschwindigkeit der Teilchen stark abgeflacht ist, was nur der Fall ist, wenn das Geschwindigkeitsmaximum in der Rohrmitte stark eingeebnet wird.

Mit anderen Worten bedeutet dies, daß der Anstieg der Kurve über der Zeit, die den Mengenanteil der Teilchen wiedergibt, die das Bauteil in der Zeiteinheit verlassen haben, sehr steil ist.

Voraussetzung für das Einhalten möglichst kleiner Totzeiten ist eine vollständige Durchflutung des Filtervolumens durch die Schmelze. Dies wird am ehesten dadurch erreicht, daß sich der Geschwindigkeitsvektor innerhalb des Filtertopfes sowohl betrags- als auch richtungsmäßig nicht oder nur sehr wenig ändert. Eine konstruktive Ausführung der Filtervorrichtung, bei der beispielsweise die Schmelzeströmung um 90 bis 180 ° umgelenkt wird, sollte nach Möglichkeit vermieden werden.

Kompakte Filtervorrichtungen, die die oben genannten Anforderungen erfüllen, lassen sich nach dem heutigen Stand der Technik, wie beispielsweise in den Literaturstellen "Filtrieren von Kunststoffschmelzen", VDI Verlag GmbH, 1981, "Kunststoff 70", Jahrgang 1980, Band II, Seiten 753 bis 758 und "Plastverarbeiter", 33. Jahrgang 1982, Nr. 12, Seiten 1447 bis 1454 beschrieben ist, am besten durch die konzentrische Anordnung von Filtereinsätzen in Kerzen- oder Diskusscheibenform in Filtergehäusen realisieren. Um bei einer Filtervorrichtung mit Kerzenfiltern eine kompakte Bauweise zu erzielen, sind die Kerzenfilter mit ihren Mittelpunkten im allgemeinen auf konzentrischen Kreisen angeordnet, ausgehend vom Mittelpunkt des Filtergehäuses, in dem sich ein zentrales Kerzenfilter befindet. Die Durchströmung der Filtervorrichtung erfolgt ohne wesentliche Umlenkung der Schmelzeströmung, die beispielsweise von oben einströmt und unten wieder aus dem Filtergehäuse ausströmt. Bei dieser bekannten Filtervorrichtung ist die Verweilzeitverteilung nicht ausreichend eng, und die Filterstandzeit läßt bezüglich der Dauer noch Wünsche offen.

Aus der Patentschrift US-A - 2,661,845 ist eine Filtervorrichtung mit einer einzigen Filterkerze bekannt, in der ein Verdrängerkörper zur Verringerung der Verweilzeit der Schmelze in der Filtervorrichtung angebracht ist. Der Verdrängerkörper verläuft koaxial zu dem Gehäuse der Filterkerze, wobei die Strömungscharakteristika über die Länge des Filters erhalten bleiben, obgleich die Fläche des Filters im Vergleich zu dem Querschnitt der Zu- und Abströmleitungen der Filterkerze sehr groß ist.

Aufgabe der Erfindung ist es, eine Filtervorrichtung der eingangs beschriebenen Art so zu verbessern, daß die Verweilzeit verkürzt, die Verweilzeitverteilung eng gehalten wird, der Druckverlust über die Länge der Filtervorrichtung bzw. die Länge der Kerzenfilter gering bleibt und die Filterstandzeit möglichst hoch ist.

Diese Aufgabe wird erfindungsgemäß durch die Filtervorrichtung nach dem Oberbegriff des Anspruchs 1 in der Weise gelöst, daß jedes Kerzenfilter im Stützkörper einen an sich bekannten Verdrängerkörper enthält, der einen Spalt gleichbleibender Weite mit der Innenwand des Stützkörpers bildet, daß die Packungsdichte der Kerzenfilter pro Volumeneinheit vom Umfang ins Zentrum des Filtergehäuses abnimmt und daß Strömungskörper zur Verringerung des Durchströmvolumens zwischen den Kerzenfiltern angeordnet sind.

In Ausgestaltung der Erfindung ist das einzelne Kerzenfilter zylindrisch ausgebildet und ist der Durchmesser des zylindrischen Verdrängerkörpers kleiner als 8/10 des Innendurchmessers des Stützkörpers. Der Durchmesser des zylindrischen Verdrängerkörpers ist zweckmäßigerweise größer als 4/10 des Innendurchmessers des Stützkörpers.

In Ausgestaltung der Erfindung beträgt bei einem vorgegebenen Volumen von

$$0,5 \ m \ x \ \pi \ (\frac{0,28}{2} \ m)^2$$

der Filtervorrichtung die Anzahl der Kerzenfilter 25, mit einem Außendurchmesser von 47 mm und einem Innendurchmesser von 32 mm des einzelnen Kerzenfilters, einem Durchmesser des Verdrängungskörpers von 14 mm, einem Abstand a = 51 mm zwischen zwei benachbarten Kerzenfiltern, wobei der Druckabfall $\Delta p = p_a - p_i$ zwischen dem Druck $p_a$ außerhalb und dem Druck $p_i$ innerhalb des einzelnen Kerzenfilters, bei weitgehend gleichem Strömungswiderstand inner- und außerhalb des einzelnen Kerzenfilters, über dessen gesamte Länge (L) konstant ist.

Die weitere Ausgestaltung der Erfindung ergibt sich aus den Merkmalen des Anspruchs 6.

Mit der Filtervorrichtung nach der Erfindung können Kunststoffschmelzen, insbesondere hochviskose Schmelzen, effektiv filtriert werden, d.h. es werden hohe Filterstandzeiten durch geringen Druckverlust, kurze Verweilzeiten bei enger Verweilzeitverteilung durch günstige Strömungsform und entsprechenden konstruktiven Aufbau und eine gleichmäßige Filterbelegung erreicht. Aufgrund der beiden letztgenannten Maßnahmen und dadurch, daß die Filtervorrichtung kaum Totecken enthält, ist der Abbau der Schmelze sehr gering. Dabei ist unter dem Abbau der Schmelze zu verstehen, daß das mittlere Molekulargewicht der Schmelze infolge des längeren Einwirkens höherer Temperatur auf die Schmelze geringer wird.

Im folgenden wird die Erfindung anhand der Zeichnungen näher erläutert. Es zeigen:

Figur 1     eine Schnittansicht durch einen Kerzenfilter nach dem Stand der Technik,

Figur 2     schematisch die Druckverläufe über die Länge des Kerzenfilters nach Figur 1 innerhalb und außerhalb des Kerzenfilters,

Figur 3     schematisch den Längsschnitt durch zwei benachbarte Kerzenfilter,

Figur 4     eine Draufsicht auf drei Kerzenfilter, deren Mittelpunkte die Eckpunkte eines gleichseitigen Dreiecks mit der Kantenlänge a bilden,

Figur 5     in schematischer Draufsicht die Anordnung der Kerzenfilter in einer bekannten Filtervorrichtung,

Figur 6     ein einzelnes Kerzenfilter im Längsschnitt nach der Erfindung,

Figur 7     eine schematische Draufsicht auf die Anordnung der Kerzenfilter in einer Filtervorrichtung nach der Erfindung,
und

Figur 8    schematisch den Druckverlust in Abhängigkeit von der Filtrierzeit bei einer bekannten und bei der erfindungsgemäßen Filtervorrichtung.

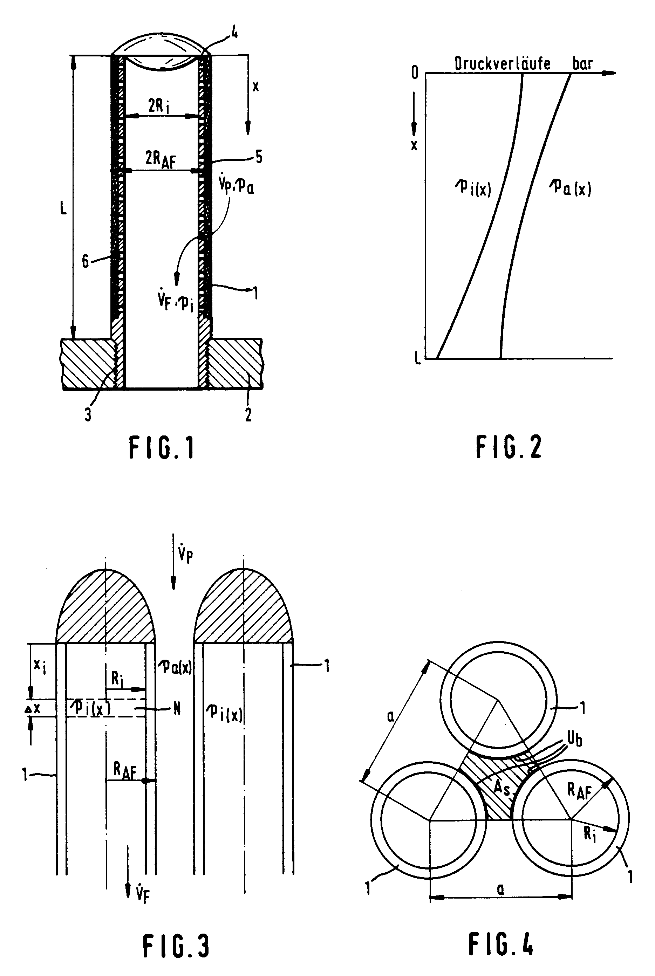

In Figur 1 ist im Längsschnitt ein Kerzenfilter 1 dargestellt, das am unteren Ende ein Gewinde 3 aufweist, das mit einem entsprechenden Gewindeloch in einer Bodenplatte 2 im Eingriff ist. Das Kerzenfilter 1 hat eine Baulänge L, über die sich zum größten Teil ein Filtermaterial 5, das auf einem Stützkörper 4 aufgebracht ist, erstreckt. Nach dem Stand der Technik besteht das Filtermaterial 5 beispielsweise aus einem Siebgewebe, nämlich Drahtgewebe, gesintertem Metallpulver oder aus Faservlies. Das Filtermaterial 5 bildet den größten Teil des Umfangs des Stützkörpers 4, der Durchgangsöffnungen 6 für die zu filtrierende Kunststoffschmelze aufweist. Die unfiltrierte Kunststoffschmelze strömt von außen an das Kerzenfilter 1 heran, tritt durch das Filtermaterial 5 und die Durchgangsöffnungen 6 des Stützkörpers 4 hindurch und fließt innen durch den Stützkörper 4 ab. In dem Stützkörper 4 ist kein weiterer Körper vorhanden. Der Innendurchmesser des Stützkörpers 4 ist gleich $2R_i$, der Außendurchmesser des Stützkörpers ist gleich $2R_{AF}$. Durch den gekrümmten Pfeil in Figur 1 ist der Strömungsverlauf der zu filtrierenden Kunststoffschmelze angedeutet. Der Volumenstrom der Kunststoffschmelze außerhalb des Kerzenfilters 1 ist durch $\dot{V}_P$ gegeben, während $p_a$ den Druck in der Kunststoffschmelzeströmung außerhalb des Kerzenfilters 1 beschreibt. Der Volumenstrom bzw. Filtratstrom innerhalb des Kerzenfilters 1 ist durch $\dot{V}_F$ gegeben, während $p_i$ den Druck innerhalb des Kerzenfilters 1 beschreibt.

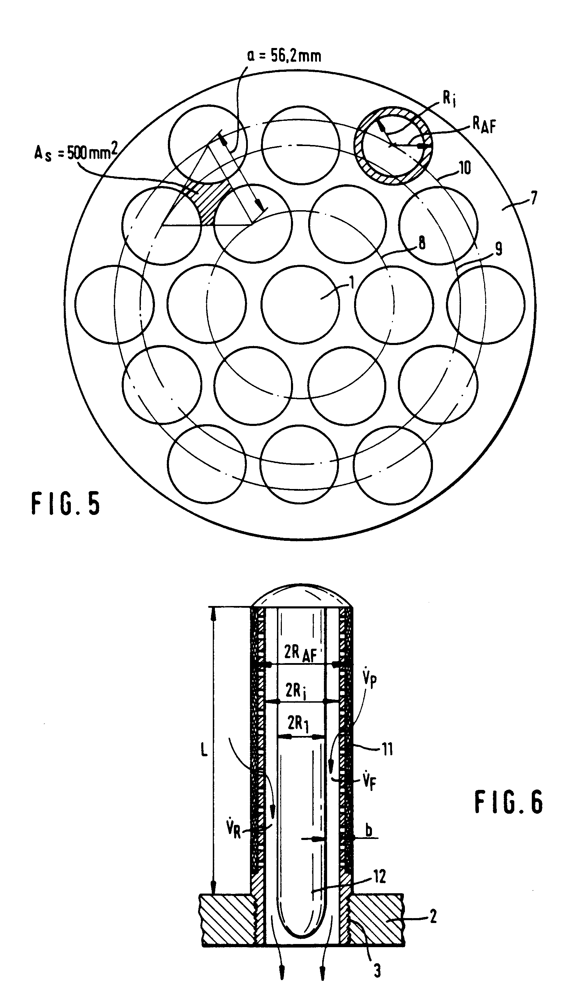

Die strömungstechnische Auslegung der einzelnen Kerzenfilter 1 in einer bekannten Filtervorrichtung 7, wie sie in Figur 5 dargestellt und nachstehend noch näher beschrieben werden wird, betrifft hauptsächlich die Innen- und Außendurchmesser der Kerzenfilter und den Abstand a der Kerzenfilter untereinander, wenn die Außenabmessungen der Filtervorrichtung 7, nämlich ihre Länge und ihr Durchmesser, vorgegeben sind.

Berechnungen und experimentelle Untersuchungen des Filtratstromes durch die einzelnen Kerzenfilter 1 innerhalb der bekannten Filtervorrichtung 7, die eine Vielzahl von Kerzenfiltern 1 enthält, zeigen, daß der Gesamtdruckverlust am kleinsten und die Filterbelegung am gleichmäßigsten sind, wenn die Druckdifferenz $\Delta\rho = p_a(x) - p_i(x)$ über die gesamte Kerzenfilterlänge L möglichst konstant ist.

Figur 2 zeigt schematisch die Druckverläufe in Abhängigkeit von x über die Kerzenfilterlänge L eines einzelnen Kerzenfilters 1. Der Druck $p_a(x)$ außerhalb des Kerzenfilters 1 ist absolut gesehen über die gesamte Kerzenfilterlänge L größer als der Druck $p_i(x)$ im Inneren des Kerzenfilters 1. Die Drücke sind jeweils am oberen Ende des Kerzenfilters 1 am größten und nehmen gegen den Fuß des Kerzenfilters 1 hin ab.

Unter Beachtung der Bedingung, daß die Druckdifferenz $\Delta p$ möglichst konstant sein soll, können die geometrischen Abmessungen der Kerzenfilter 1 und die Abstände der Kerzenfilter 1 untereinander berechnet werden.

Die Berechnungsmethoden sind zum Beispiel in dem Artikel von R.R. Kraybill "SPE-Antec" 38, Jahrgang 1980, Seiten 92 bis 95 ausführlich beschrieben. Die dort angegebenen Gleichungen gelten streng genommen für ein Topffilter, sind aber durch entsprechende Modifikation auch auf Filtervorrichtungen mit einer Anzahl von Kerzenfiltern 1 anwendbar. Dabei ist zu beachten, daß diese Methoden für konstante Viskosität der Schmelze gelten und nicht das strukturviskose Verhalten der Kunststoffschmelze berücksichtigen.

Zur Auslegung beliebiger Geometrien von Kerzenfiltern wurde deshalb ein Modell eines Kerzenfilters 1 entwickelt, das von einer Aufteilung der Kerzenfilterlänge L in N Segmenten ausgeht, so daß auch eine variable Viskosität der Schmelze berücksichtigt werden kann. Im folgenden sind kurz die wichtigsten Gleichungen angegeben, die in diesem Modell benutzt werden. Hierzu wird auf die Figuren 3 und 4 Bezug genommen.

In Figur 3 sind schematisch die Längsschnitte zweier nebeneinander liegender Kerzenfilter 1,1 angedeutet. Außerhalb der Kerzenfilter 1,1 bewegt sich der Volumenstrom $\dot{V}_P$ von oben nach unten, wobei in der Kunststoffschmelze der Druck $p_a(x)$ herrscht. Jedes Kerzenfilter 1 hat einen Innenradius $R_i$ und einen Außenradius $R_{AF}$. Im Inneren jedes Kerzenfilters 1 herrscht im Filtrat- bzw. Volumenstrom $\dot{V}_F$ ein Druck $p_i(x)$. Für das Längenelement $\Delta x$ des einzelnen Segments N in Figur 3 gelten folgende Gleichungen:

Volumenstrom $\dot{V}_P$ außerhalb des Kerzenfilters 1:

$$\dot{V}_p = - \frac{\pi R_a^4}{8 \eta_{a,i}} \cdot \frac{dp_a}{dx_i} \qquad (1)$$

In Gl. 1 stellt $\eta_{a,i}$ die sog. repräsentative Viskosität im Segment i dar, worunter zu verstehen ist, daß anstelle der tatsächlichen Viskositätsverteilung der bestimmte Viskositätswert $\eta_a$ genommen wird.

Der hydraulische Radius $R_a$ wird dabei über die hydraulische Fläche $\overline{A}_s$ zwischen den Kerzenfiltern 1,1 berechnet, wobei die hydraulische Fläche $\overline{A}_s$ in Draufsicht in Figur 4 schraffiert dargestellt ist und im Außenraum dreier benachbarter Kerzenfilter 1 von dem benetzten Umfang $U_b$ der drei Kerzenfilter und den durch die Mittelpunkte der Kerzenfilter 1, die die Eckpunkte eines Dreiecks bilden, gezogenen Verbindungseiten eingeschlossen ist. Wie aus Figur 4 ersichtlich ist, sind die Verbindungsseiten der Mittelpunkte der Kerzenfilter 1 Seiten eines gleichseitigen Dreiecks mit der Seitenlänge a, die zugleich der Mittenabstand zweier benachbarter Kerzenfilter 1,1 ist. Die benetzten Teilumfänge der drei Kerzenfilter 1 in Figur 4, welche zusammen den benetzten Umfang $U_b$ der hydraulischen Fläche $\overline{A}_s$ bilden, sind in Figur 4 durch dickere Linien markiert.

Somit gilt für den Radius $R_a$:

$$2R_a = \frac{4\overline{A}_s}{U_b} \quad (U_b = benetzter\ Umfang)\ (2)$$

Der Volumenstrom $\dot{V}_F$ (Filtratstrom) innerhalb des Kerzenfilters 1 ist gegeben durch

$$V_F = - \frac{\pi R_i^4}{8 \eta_{i,i}} \cdot \frac{dp_i}{dx_i} \quad (Rohrströmung) \qquad (3a)$$

In Figur 5 ist, wie schon voranstehend erwähnt wurde, eine bekannte Filtervorrichtung 7 schematisch in Draufsicht dargestellt, die unter Zugrundelegung der Gleichungen (1), (2) und (3a) ausgelegt wurde. Im Mittelpunkt der Filtervorrichtung 7 ist ein zentrales Kerzenfilter 1 angeordnet, und um dieses gruppieren sich entlang konzentrischer Kreise 8, 9 und 10 weitere Kerzenfilter 1. Die Mittelpunkte dieser weiteren Kerzenfilter 1 befinden sich jeweils auf diesen konzentrischen Kreisen 8 bis 10, wobei die Anordnung der Mittelpunkte der einzelnen Kerzenfilter 1 auf den gedachten konzentrischen Kreisen 8 bis 10 in einer Weise erfolgt, bei der jeweils drei aneinander angrenzende Kerzenfilter mit ihren Mittelpunkten ein gleichseitiges Dreieck mit der Kantenlänge a bilden und jeweils eine gleichbleibende hydraulische Fläche $\overline{A}_s$ einschließen. Wie schon erwähnt wurde, besitzt keiner der Kerzenfilter 1 in der bekannten Filtervorrichtung 7 im Inneren einen Verdrängerkörper.

In Figur 6 ist ein Kerzenfilter 11 nach der Erfindung im schematischen Längsschnitt dargestellt, das im Inneren seines Stützkörpers 4 einen Verdrängerkörper 12 enthält, der einen Spalt gleichbleibender Weite b mit der Innenwand des Stützkörpers 4 bildet. Das Kerzenfilter 11 ist ähnlich wie das Kerzenfilter 1 nach Figur 1 zylindrisch ausgebildet und weist an seinem unteren Ende ein Gewinde 3 auf, das mit einem Gewindeloch in der Bodenplatte 2 einer Filtervorrichtung im Eingriff ist. Das Kerzenfilter 11 besteht aus dem Stützkörper 4 und dem Filtermaterial 5, wobei der Stützkörper wieder Durchgangsöffnungen 6 enthält, durch die die zu filternde Kunststoffschmelze in den Spalt mit der Weite b einfließt. Die gefilterte Kunststoffschmelze fließt dann nach unten hin, durch die Bodenplatte 2 hindurch. Der Strömungsverlauf der Kunststoffschmelze außerhalb und innerhalb des Kerzenfilters 1 ist durch entsprechende Pfeile in Figur 6

angedeutet.

Der Durchmesser $2R_1$ des zylindrischen Verdrängerkörpers 12 ist kleiner als 8/10 und größer als 4/10 des Innendurchmessers $2R_i$ des Stützkörpers 4.

Der Volumenstrom $\dot{V}_R$ im Spalt zwischen dem Verdrängerkörper 12 und der Innenwand des Stützkörpers 4 berechnet sich gemäß der folgenden Beziehung.

$$\dot{V}_R = - \frac{\pi(R_i^4 - R_1^4) \; R_F}{8 \; n_{i,i}} \; \frac{dp_i}{dx_i} \tag{3b}$$

$$\overline{R}_F = R_i \left( 1 + K_F^2 + \frac{1 - K_F^2}{\ln K_F} \right)^{1/2}$$

$$K_F = R_1 / R_i$$

Gleichung (3b) gilt dann, wenn im Stützkörper des Kerzenfilters 11 der konzentrische Verdrängerkörper 12 mit dem Radius $R_1$ eingefügt ist.

Der durch das Flächenelement $dA = 2\pi \, R_{AF} \bullet dx$ hindurchtretende Filterfluß berechnet sich gemäß

$$d\dot{V}_{F,i} = 2\pi \; R_{AF} \; \frac{1}{W} \; [p_{a,i} - p_{i,i}], \tag{4}$$

mit dem von Ort i abhängigen Filterwiderstand W, der nach bekannten Methoden der Kuchenfiltration berechnet werden kann, wie sie beispielsweise in dem Vorlesungsumdruck "Mechanische Verfahrenstechnik" von R. Rautenbach, RWTH Aachen angeführt sind.

Durch numerische Integration der voranstehend angegebenen Gleichungen (1) bis (4) mit den entsprechenden Randbedingungen können bei vorgegebener Geometrie, nämlich der Größen $R_i$, $R_1$, L, $R_a$ der Druckverlust $\Delta p = p_a - p_i$ und durch nochmalige Integration die Filtratmenge $V_F$ als Funktion der Zeit bestimmt werden.

Überraschenderweise zeigte sich bei diesen Auslegungsrechnungen, daß der Gesamtdruckabfall über die Zeit sich besonders günstig entwickelt, wenn in das Kerzenfilter der zusätzliche konzentrische Verdrängerkörper 12 eingebaut ist.

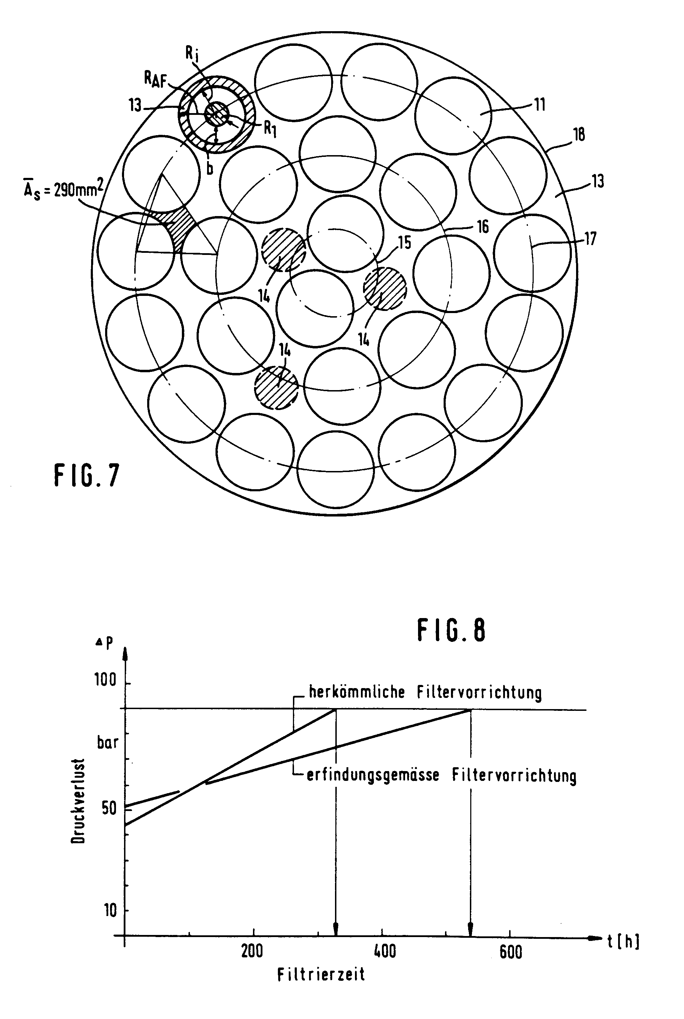

Bei der in Figur 6 gezeigten Anordnung ist zwar der Strömungswiderstand beim Abtransport des Filtrats größer als bei dem herkömmlichen Kerzenfilter ohne Verdrängerkörper, jedoch können zum Erzielen einer konstanten Druckdifferenz $\Delta p$ über die Kerzenfilterlänge L die Kerzenfilter dichter gepackt werden als bei einer herkömmlichen Filtervorrichtung, wie sie in Figur 5 dargestellt ist. Damit ergibt sich eine höhere Packungsdichte der Kerzenfilter pro Volumeneinheit, wie nachstehend anhand der in Figur 7 gezeigten Filtervorrichtung 13 nach der Erfindung erläutert wird. Bei der Filtervorrichtung 13 sind die Kerzenfilter 11 mit ihren Mittelpunkten entlang gedachter konzentrischer Kreise 15,16,17 im zylindrischen Filtergehäuse 18 angeordnet. Diese Filtervorrichtung hat gegenüber der bekannten Filtervorrichtung eine höhere Packungsdichte der Kerzenfilter 11 pro Volumeneinheit. Dies ist gleichbedeutend mit einer Erhöhung der Filterfläche pro vorgegebenem Gesamtvolumen V, wodurch offensichtlich die Belegung des Filtermaterials mit Filtrat langsamer vonstatten geht. Auch ist mit dem Einbau eines Verdrängerkörpers 12 in jedes Kerzenfilter 11 eine Verkürzung der Verweilzeit der Kunststoffschmelze verbunden, wodurch der Abbau der Schmelze in positiver Weise verringert wird. Bei der erfindungsgemäßen Filtervorrichtung 13 ist der Druckverlust zwischen dem Druck $p_a$ außerhalb des einzelnen Kerzenfilters 11 und dem Druck $p_i$ innerhalb des

Kerzenfilters 11 über die gesamte Kerzenfilterlänge L annähernd konstant.

Wie aus Figur 7 ersichtlich ist, sind zwischen einigen benachbarten Kerzenfiltern 11 jeweils Strömungskörper 14 zur Begrenzung der Größe der zwischen den Kerzenfiltern 11 eingeschlossenen hydraulischen Fläche $\overline{A}_s$ angeordnet. Diese Strömungskörper 14 sind erforderlich, um die hydraulischen Flächen zwischen mehreren benachbarten Kerzenfiltern 11 nicht zu groß werden und dadurch die Strömungsverhältnisse zwischen und in den Kerzenfiltern in unerwünschter Weise verändern zu lassen. Der Außendurchmesser $2R_A$ eines Kerzenfilters 11 in der Filtervorrichtung 13 gemäß Figur 7 bestimmt sich nach der Beziehung $2R_A$ = 4 $A_s/U_b$, mit dem von der Kunststoffschmelze benetzten Umfang $U_b$ dreier Kerzenfilter 11, deren Mittelpunkte die Eckpunkte eines Dreiecks bilden, das im Außenraum der drei Kerzenfilter 11 die hydraulische Fläche $\overline{A}_s$ einschließt. Wie anhand der nachstehend angeführten beiden Beispiele gezeigt wird, ist bei gleicher Geometrie der Kerzenfilter und gleichem Schmelzedurchsatz der kürzeste Abstand a zwischen den Mittelpunkten benachbarter Kerzenfilter in der Filtervorrichtung 13 nach der Erfindung etwa gleich 9/10 des kürzesten Abstands benachbarter Kerzenfilter 1 in der herkömmlichen Filtervorrichtung 7. Durch die höhere Packungsdichte der Kerzenfilter 11 nach der Erfindung ist auch die hydraulische Fläche $\overline{A}_s$ kleiner als die hydraulische Fläche $\overline{A}_s$ einer herkömmlichen Filtervorrichtung 7 und beträgt im allgemeinen nur 55 bis 60 % von deren Fläche.

Anhand zweier Beispiele wird eine herkömmliche Filtervorrichtung mit der erfindungsgemäßen Filtervorrichtung verglichen.

Auslegung der Geometrie einer herkömmlichen Filtervorrichtung:

Das Topfvolumen V hat eine Höhe von 0,5 m und einen Durchmesser von 0,28 m. Die Geometrie des einzelnen Kerzenfilters 1 ist gegeben durch die Kerzenfilterlänge L = 0,5 m, den Außendurchmesser $2R_{AF}$ des Kerzenfilters von 47 mm und dem Innendurchmesser $2R_i$ des Kerzenfilters von 32 mm.

Aufgrund dieser Geometrieabmessungen ergibt die Rechnung gemäß den Gleichungen (1) bis (3a) den Einsatz von 19 Kerzenfiltern 1 in der Filtervorrichtung 7. Der Durchsatz $\dot{m}$ an Schmelze beträgt für diese Filtervorrichtung 7 gleich 2.500 kg/h, wobei Polypropylen mit der nachstehend angegebenen Viskosität $\eta$ zum Einsatz kommt und die Temperatur der Schmelze T = 270 °C beträgt.

$$\eta = \frac{3055 \cdot a_T}{1 + 0,287710^{-2}\,(3055 \cdot a_T \cdot \dot{\gamma})^{0,623}} \quad [Pas]$$

$$a_T = \exp\left(5136\,\frac{1}{K}\,\left(\frac{1}{273 + T_O} - \frac{1}{273 + T}\right)\right)$$

$$T_O = 230\ °C.$$

Der Abstand a zwischen den Kerzenfiltern 1, siehe Figur 4, damit die Druckdifferenz $\Delta p = p_a - p_i$ über die Kerzenfilterlänge L möglichst gleich bleibt, berechnet sich zu a = 56,2 mm. Die Gesamtkonfiguration der Kerzenfilter 1 in der Filtervorrichtung 7 ist in Figur 5 schematisch dargestellt.

Auslegung der Filtervorrichtung 13 nach der Erfindung:

Gegenüber dem Beispiel zum Stand der Technik sind das Volumen V der Filtervorrichtung 13, der Schmelzedurchsatz $\dot{m}$, die Kerzenfiltergeometrie mit L = 0,5 m, D = 0,28 m, $2R_{AF}$ = 47 mm, $2R_i$ = 32 mm und die zu fördernde Schmelze unverändert.

Es wird anhand der Gleichungen (1) bis (4) die maximale Anzahl an Kerzenfiltern 11, die in dem vorgegebenen Volumen Platz haben, mit der Maßgabe berechnet, daß der Druckabfall $\Delta p = p_a - p_i$ über die Kerzenfilterlänge L möglichst konstant bleibt. Desweiteren wird der Durchmesser $2R_1$ des Verdrängerkörpers 12 in den einzelnen Kerzenfiltern 11 bestimmt.

Das Ergebnis lautet, daß in dem vorgegebenen Volumen 25 Kerzenfilter 11 Platz haben, die im Mittel einen Abstand von a = 51 mm untereinander aufweisen. Um eine gleichmäßigere Druckdifferenz $\Delta p$ zu erzielen, müssen laut Rechnung die Verdrängerkörper 12 im Mittel einen Durchmesser von $2R_1$ = 14 mm aufweisen. Die hydraulische Fläche $\overline{A}_s$ beträgt 290 mm², im Vergleich zu der hydraulischen Fläche $\overline{A}_s$ von

500 mm² bei der herkömmlichen Filtervorrichtung 7.

In Figur 7 ist die Anordnung der Kerzenfilter 11 in der Filtervorrichtung 13 gezeigt.

Von wesentlichem Interesse ist der Vergleich der beiden Filtervorrichtungen 7 und 13 hinsichtlich des Druckverlustanstiegs als Funktion der Zeit, der in Figur 8 schematisch gezeigt ist.

Danach ist in der Filtervorrichtung 7 zu Beginn des Filtervorgangs, d.h. zur Zeit t = 0 der Druckverlust $\Delta p$ kleiner als bei der Filtervorrichtung 13 nach der Erfindung, jedoch ist aufgrund der geringeren Filterfläche der Anstieg des Druckverlusts im Verlaufe des Filtervorgangs höher als bei der erfindungsgemäßen Filtervorrichtung 13. Wird als praktikable Obergrenze ein Druckverlust von $\Delta p_{max}$ = 90 bar angenommen, so wird dieser Wert bei der bekannten Filtervorrichtung 7 nach ca. 300 h Betriebsdauer und bei der Filtervorrichtung 13 nach der Erfindung erst nach ca. 540 h Betriebsdauer erreicht.

Durch den Einbau von Verdrängerkörpern in allen Kerzenfiltern der erfindungsgemäßen Filtervorrichtung 13 wird die Filterstandzeit drastisch verlängert, und der relative Gewinn an zusätzlicher Filterstandzeit beträgt mehr als 60 % im Vergleich zu der herkömmlichen Filtervorrichtung 7.

**Patentansprüche**

1. Filtervorrichtung zum gleichmäßigen Filtrieren von Kunststoffschmelzen, mit einem Filtergehäuse, in dem entlang konzentrischer Kreise Kerzenfilter angeordnet sind, die aus einem Stützkörper und einem Filtermaterial bestehen und durch welche die zu filternde Kunststoffschmelze hindurchfließt, dadurch gekennzeichnet, daß jedes Kerzenfilter (11) im Stützkörper (4) einen Verdrängerkörper (12) enthält, der einen Spalt gleichbleibender Weite (b) mit der Innenwand des Stützkörpers (4) bildet, daß die Packungsdichte der Kerzenfilter pro Volumeneinheit vom Umfang ins Zentrum des Filtergehäuses (18) abnimmt und daß Strömungskörper (14) zur Verringerung des Durchströmvolumens zwischen den Kerzenfiltern (11) angeordnet sind.

2. Filtervorrichtung nach Anspruch 1, dadurch gekennzeichnet, daß das Kerzenfilter (11) zylindrisch ausgebildet ist und daß der Durchmesser ($2R_1$) des zylindrischen Verdrängerkörpers (12) kleiner als 8/10 des Innendurchmessers ($2R_i$) des Stützkörpers (4) ist.

3. Filtervorrichtung nach Anspruch 2, dadurch gekennzeichnet, daß der Durchmesser ($2R_1$) des zylindrischen Verdrängerkörpers (12) größer als 4/10 des Innendurchmessers ($2R_i$) des Stützkörpers (4) ist.

4. Filtervorrichtung nach den Ansprüchen 1 bis 3, dadurch gekennzeichnet, daß bei einem vorgegebenen Volumen von

$$0,5 \ m \ x \ \pi \ \left(\frac{0,28}{2}m\right)^2$$

der Filtervorrichtung (13) die Anzahl der Kerzenfilter 25 beträgt, mit einem Außendurchmesser ($2R_{AF}$) von 47 mm und einem Innendurchmesser ($2R_i$) von 32 mm des einzelnen Kerzenfilters (11), einem Durchmesser ($2R_1$) des Verdrängerkörpers (12) von 14 mm, bei einem Abstand a = 51 mm zwischen zwei benachbarten Kerzenfiltern, wobei der Druckabfall $\triangle p = p_a - p_i$ zwischen dem Druck $p_a$ außerhalb und dem Druck pi innerhalb des einzelnen Kerzenfilters (11), bei weitgehend gleichem Strömungswiderstand inner- und außerhalb des einzelnen Kerzenfilters (11), über dessen gesamte Länge (L) konstant ist.

5. Filtervorrichtung nach Anspruch 1, dadurch gekennzeichnet, daß zwischen einigen benachbarten Kerzenfiltern (11) jeweils ein zylindrischer Strömungskörper (14) zur Begrenzung der Größe der zwischen den Kerzenfiltern eingeschlossenen hydraulischen Fläche $\overline{As}$ angeordnet sind.

**Claims**

1. Filter apparatus for the uniform filtration of plastic melts, with a filter housing containing candle filters arranged along concentric circles, which each comprise a supporting body and a filter material and through which flows the plastic melt to be filtered, wherein each candle filter (11) contanins in the supporting body (4) a displacement body (12) which forms a gap of constant width (b) with the inner wall of the supporting body (4), wherein the packing density of the candle filters per unit of volume decreases from the circumference to the center of the filter housing (18) and wherein flow bodies (14) are arranged between the candle filters (11) to reduce the flow-through volume.

2.  The filter apparatus as claimed in claim 1, wherein the candle filter (11) is cylindrical, and wherein the diameter ($2R_1$) of the cylindrical displacement body (12) is less than 8/10 of the inside diameter ($2R_i$) of the supporting body (4).

3.  The filter apparatus as claimed in claim 2, wherein the diameter ($2R_1$) of the cylindrical displacement body (12) is more than 4/10 of the inside diameter ($2R_i$) of the supporting body (4).

4.  The filter apparatus as claimed in claims 1 to 3, wherein, at a given volume of

$$0.5 \ \text{m} \ \times \ \pi \ ( \ \frac{0.28}{2} \ \text{m} \ )^2$$

of the filter apparatus (13), the number of candle filters is 25, with an outside diameter ($2R_{AF}$) of 47 mm and an inside diamter ($2R_i$) of 32 mm of the individual candle filter (11), a diameter ($2R_1$) of 14 mm of the displacement body (12) and a distance a = 51 mm between two adjacent candle filters (11), the pressure drop $\triangle p = p_a - p_i$ between the pressure $p_a$ outside and the pressure $p_i$ inside the individual candle filter (11) being constant at a flow resistance which is substantially the same inside and outside the individual candle filter (11) over the entire length (L) thereof.

5.  The filter apparatus as claimed in claim 1, wherein a cylindrical flow body (14) each for limiting the size of the hydraulic area $\overline{As}$ enclosed between the candle filters is arranged between some adjacent candle filters (11).

**Revendications**

1.  Dispositif de filtration pour la filtration uniforme de masses fondues de matière plastique, comprenant un boîtier de filtre dans lequel sont disposés, le long de cercles concentriques, des filtres en forme de bougies qui sont constitués d'un corps de soutien et d'un matériau filtrant et à travers lesquels s'écoule la masse fondue de matière plastique à filtrer, **caractérisé** en ce que chaque filtre-bougie (11) contient, dans le corps de soutien (4), un corps de refoulement (12) qui forme une fente de largeur constante (b) avec la paroi intérieure du corps de soutien (4), en ce que la densité de tassement des filtres-bougies par unité de volume diminue de la périphérie vers le centre du boîtier de filtre (18), et en ce que des corps d'écoulement (14) sont disposés entre les filtres-bougies (11) afin de réduire le volume de passage.

2.  Dispositif de filtration selon la revendication 1, caractérisé en ce que le filtre-bougie (11) est cylindrique, et en ce que le diamètre ($2R_1$) du corps de refoulement cylindrique (12) est inférieur à 8/10 du diamètre intérieur ($2R_i$) du corps de soutien (4).

3.  Dispositif de filtration selon la revendication 2, caractérisé en ce que le diamètre ($2R_1$) du corps de refoulement cylindrique (12) est supérieur à 4/10 du diamètre intérieur ($2R_i$) du corps de soutien (4).

4.  Dispositif de filtration selon l'une des revendications 1 à 3, caractérisé en ce que, pour un volume alloué de 0,5 m x $\pi$ (0,28/2 m)$^2$ du dispositif de filtration (13), le nombre de filtres-bougies est égal à 25, avec un diamètre extérieur ($2R_{AF}$) de 47 mm et un diamètre intérieur ($2R_i$) de 32 mm pour chaque filtre-bougie (11) et un diamètre ($2R_1$) du corps de refoulement (12) de 14 mm, pour une distance a = 51 mm entre deux filtres-bougies voisins, la chute de pression $\triangle p = p_a - p_i$, entre la pression $p_a$ à l'extérieur et la pression $p_i$ à l'intérieur de chaque filtre-bougie (11), étant constante, en présence d'une résistance à l'écoulement sensiblement identique à l'intérieur et à l'extérieur de chaque filtre-bougie (11), sur toute sa longueur (L).

5.  Dispositif de filtration selon la revendication 1, caractérisé en ce que des corps d'écoulement cylindriques (14) sont respectivement disposés entre quelques filtres-bougies (11) voisins, afin de limiter la taille de la surface hydraulique $\overline{As}$ incluse entre les filtres-bougies.

**FIG.1**

**FIG.2**

Druckverläufe     bar

$\mathcal{P}_{i(x)}$     $\mathcal{P}_{a(x)}$

**FIG.3**

**FIG.4**

FIG. 5

FIG. 6

FIG. 7

FIG. 8